# EUROPÄISCHE PATENTSCHRIFT

(11) **EP 0 583 222 B1**
(45) Veröffentlichungstag und Bekanntmachung des Hinweises auf die Patenterteilung: **08.01.1997**
(21) Anmeldenummer: 93810528.5
(22) Anmeldetag: 22.07.1993
(51) Int. Cl.: G01M 3/26

(54) **Verfahren zur Prüfung der Kontinuität der Längsstege von Mehrkammerhohlprofilen**
Procedure for testing the continuity of the webs of multiple chamber hollow profiles
Procédé pour contrôler la continuité des âmes de profils creux à plusieurs compartiments

(30) Priorität: 13.08.1992 CH 2534/92
(43) Veröffentlichungstag der Anmeldung: 16.02.1994
(73) Patentinhaber: Alusuisse Technology & Management AG, 8212 Neuhausen am Rheinfall (CH)
(72) Erfinder: Meier, Ernst, CH-3945 Steg (CH); Brunetti, Anton, CH-3965 Chippis (CH); Nanzer, Charles-André, CH-1978 Lens (CH)

(56) Entgegenhaltungen:
- EP-A- 0 448 894
- GB-A- 1 197 631

## Beschreibung

Die Erfindung betrifft ein Verfahren zur Prüfung der Kontinuität der Längsstege von Mehrkammerhohlprofilen.

Mehrkammerhohlprofile aus Aluminium werden üblicherweise über eine Matrize mit Dornen stranggepresst. Bedingt durch einen ungleichmässigen Materialfluss können hierbei die Kammerwände bildenden Längsstege in ihrer Wandstärke Schwankungen unterworfen sein, die im Extremfall zum lokalen Abreissen des Materialflusses und damit zu Fehlstellen in Form von Durchbrüchen in den Hohlkammerwänden führen. Für gewisse Anwendungen ist eine Kontinuität der Längsstege erforderlich, d.h. diese dürfen keine Durchbrüche aufweisen. Es besteht daher ein Bedarf nach einer Prüfmöglichkeit der Hohlkammerwände von Mehrkammerhohlprofilen aus stranggepresstem Aluminium auf Fehlstellen.

Während bei verhältnismässig kleinen Profillängen eine einfache visuelle Kontrolle von den Stirnseiten der Profile her ausreichend sein mag, ist eine zuverlässige Prüfung auf Fehlstellen bei Profillängen von mehreren Metern mit dieser einfachen Sichtkontrolle nicht mehr möglich. Es ist daher bereits vorgeschlagen worden, Fehlstellen mittels Ultraschall- oder Wirbelstromverfahren zu lokalisieren. Diese Prüfmethoden sind jedoch zu wenig selektiv und haben sich daher in der Praxis nicht durchgesetzt.

Angesichts dieser Gegebenheiten hat sich der Erfinder die Aufgabe gestellt, ein Verfahren zu schaffen, mit welchem die Kontinuität der Längsstege von Mehrkammerhohlprofilen auf einfache Art geprüft werden kann.

Zur erfindungsgemässen Lösung der Aufgabe führt, dass zumindest zwei einander benachbarte, einen gemeinsamen Längssteg aufweisende Hohlkammern stirnseitig beidends luftdicht verschlossen werden, in einer der Hohlkammern ein Unterdruck erzeugt und in der andern Hohlkammer die zeitliche Druckveränderung gemessen wird.

Nach einer bevorzugten Durchführung des Verfahrens wird die zeitliche Druckveränderung in beiden Hohlkammern gemessen, wobei die Zeit zum Erreichen eines bestimmten Enddruckes als Mass für die Kontinuität des gemeinsamen Längssteges verwendet wird.

Das Verfahren ist insbesondere geeignet zur Prüfung von aus Aluminium stranggepressten Mehrkammerhohlprofilen.

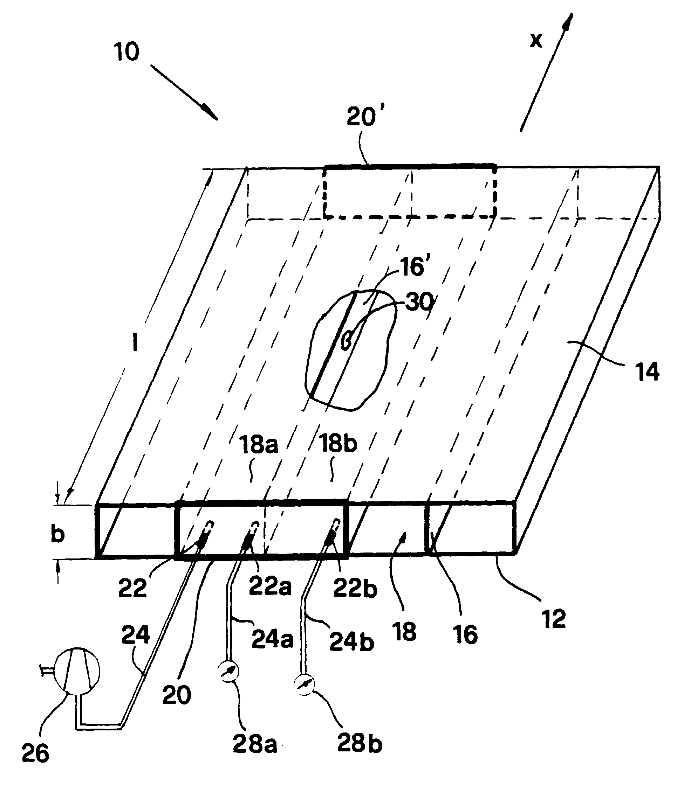

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in ihrer einzigen Figur eine teilweise geschnittene Schrägsicht auf ein Mehrkammerhohlprofil mit Einrichtungen zur Durchführung des erfindungsgemässen Verfahrens.

Ein aus Aluminium stranggepresstes Mehrkammerhohlprofil 10 --beispielsweise ein Fachwerkbodenprofil für den Wangenboden von Schienenfahrzeugen-- weist ein Bodenplatte 12 sowie eine parallel zu dieser in einem Abstand b von beispielsweise 50mm angeordnete Deckplatte 14 auf. Die Profillänge 1 beträgt beispielsweise 20m. Bodenplatte 12 und Deckplatte 14 sind über in Strangpress- bzw. Profillängsrichtung x verlaufende Längsstege 16 unter Bildung von Hohlkammern 18 miteinander verbunden. Zur Prüfung eines Längssteges 16' auf Fehlstellen sind die benachbarten, den gemeinsamen Längssteg 16' aufweisenden Hohlkammern 18a, b stirnseitig beidends mit je einer Abdeckung 20, 20' --beispielsweise aus Gummi-- luftdicht verschlossen. Eine der Abdeckungen 20 ist über einen mit einer der Hohlkammern 18a in Verbindung stehenden Anschluss 22 mittels einer Druckleitung 24 an einer Vakuumpumpe 26 sowie über je einen mit den beiden Hohlkammern 18a, b in Verbindung stehenden Anschluss 22a, b über eine Druckleitung 24a, b an je ein Manometer 28a, b angeschlossen.

Wird nun über die Vakuumpumpe 26 der Druck pₐ in der Hohlkammer 18a erniedrigt, so können grundsätzlich drei verschiedene Betriebszustände eintreten.
1. Der Druck pₐ in der Hohlkammer 18a erreicht nach einer gewissen Zeit t₁ <t den Enddruck p <pₒ --pₒ bedeutet den aktuellen Atmosphärendruck-- und der Druck p_{b} in der benachbarten Hohlkammer 18b bleibt unverändert, d.h. der zwischenliegende Längssteg 16' weist keine Durchbrüche auf.
2. Der Druck pₐ in der Hohlkammer 18a erreicht nach einer gewissen Zeit t₂ <t den Endwert p und der Druck p_{b} in der benachbarten Hohlkammer 18b nimmt ebenfalls ab, d.h. der zwischenliegende Längssteg 16' weist mindestens einen Durchbruch 30 auf.
3. Der Druck pₐ in der Hohlkammer 18a erreicht auch nach einer Zeit t₃ >t den Endwert p nicht, d.h. die Hohlkammern 18a,b sind stirnseitig nicht dicht verschlossen und/oder neben einer Fehlstelle 30 im gemeinsamen Längssteg 16' weist mindestens ein weiterer benachbarter Längssteg 16 eine weitere Fehlstelle auf.

Die Werte für t und p dienen als Referenzwerte der Kalibrierung der Mess- und Prüfeinrichtung und werden an einer Hohlkammer mit einer Eichbohrung eines Durchmessers von beispielsweise 3mm bestimmt. Die Zeitdauer t₂, die zum Erreichen des Enddruckes p im obigen Betriebszustand 2 benötigt wird, ist zumindest für eine qualitative Aussage über die Grösse eines festgestellten Durchbruchs 30 geeignet. Durch weitere Eichprofile, d.h. Profile mit definierten Fehlstellengrössen --beispielsweise Bohrungen unterschiedlichen Durchmessers-- kann die Aussagekraft noch erhöht werden.

Die vorstehenden Ausführungen beziehen sich auf die Einzelüberprüfung von jeweils zwei benachbarten Hohlkammern 18a, b bzw. des zwischenliegenden Längssteges 16'. Selbstverständlich können auch mehrere Hohlkammerpaare simultan geprüft werden. Ebenso ist es denkbar, dass sich die Abdeckungen 20, 20' über die gesamte Breite des Mehrkammerhohlprofiles 10 erstrecken, d.h. sämtliche Hohlkammern 18 sind stirnseitig abgedichtet und in einer der Abdeckungen 20 sind für jede der Hohlkammern 18 je ein Anschluss 22 mit Druckleitungen 24 zum Anschluss an eine Vakuumpunpe 26 sowie Manometer 28 vorgesehen. Ueber entsprechende --in der Zeichnung nicht dargestellte-- Ventile, die zentral angesteuert werden können, kann die Messung von jeweils korrespondierenden Hohlkammerpaaren 16 a, b zumindest teilweise automatisiert werden.

## Patentansprüche

1. Verfahren zur Prüfung der Kontinuität der Längsstege (16) von Mehrkammerhohlprofilen (10),
dadurch gekennzeichnet,
dass zumindest zwei einander benachbarte, einen gemeinsamen Längssteg (16') aufweisende Hohlkammern (18a,b) stirnseitig beidends luftdicht verschlossen werden, in einer der Hohlkammern (18a) ein Unterdruck erzeugt und in der anderen Hohlkammer (18b) die zeitliche Druckveränderung gemessen wird.

2. Verfahren nach Anspruch 1, dadurch gekennzeichnet, dass die zeitliche Druckveränderung in beiden Hohlkammern (18a,b) gemessen wird.

3. Verfahren nach Anspruch 1 oder 2, dadurch gekennzeichnet, dass die Zeit (t) zum Erreichen eines bestimmten Enddruckes (p) in der Hohlkammer (18a) als Mass für die Kontinuität des gemeinsamen Längssteges (16') verwendet wird.

4. Anwendung des Verfahrens nach einem der Ansprüche 1 bis 3 zur Prüfung von aus Aluminium stranggepressten Mehrkammerhohlprofilen (10).

## Claims

1. Method for testina the continuitv of the lonaitudinal partitions (16) of multi-compartment hollow sections (10), characterised in that at least two adjacent hollow chambers (18a,b) having a common lonqitudinal partition (16') are hermetically sealed at both end faces, a negative pressure is produced in one of the hollow chambers (18a) and the change in pressure over time in the other hollow chamber (18b) is measured.

2. Method according to claim 1, characterised in that the change in pressure over time in both hollow chambers (18a,b) is measured.

3. Method according to claim 1 or claim 2, characterised in that the time (t) taken to reach a specific final pressure (p) in the hollow chamber (18a) is used as a measure of the continuity of the common longitudinal partition (16').

4. Use of the method according to one of claims 1 to 3 for testing multi-compartment hollow sections (10) extruded from aluminium.

## Revendications

1. Procédé pour contrôler la continuité des barrettes longitudinales (16) dans des profilés creux à chambres multiples (10), caractérisé en ce que l'on referme du côté frontal de façon étanche à l'air au moins deux chambres creuses (18a, b) présentant une barrette longitudinale commune (16') aux deux extrémités, en ce que l'on génère une dépression dans l'une des chambres creuses (18a) et en ce que l'on mesure la modification dans le temps de la pression dans l'autre chambre creuse (18b).

2. Procédé selon la revendication 1, caractérisé en ce que l'on mesure la modification dans le temps de la pression dans les deux chambres creuses (18a, b).

3. Procédé selon l'une ou l'autre des revendications 1 et 2, caractérisé en ce que le temps (t) pour atteindre une certaine pression finale (p) dans la chambre creuse (18a) est utilisé comme référence pour la continuité de la barrette longitudinale commune (16').

4. Application du procédé selon l'une quelconque des revendications 1 à 3, pour contrôler des profilés creux à chambres multiples (10) extrudés en aluminium.
